# EUROPEAN PATENT APPLICATION

(11) **EP 4 592 183 A1**
(43) Date of publication of application: **30.07.2025**
(21) Application number: 25154794.9
(22) Date of filing: 29.01.2025
(51) Int. Cl.: B64D 11/06, B60N 2/02, B60N 2/68, B61D 33/00

(54) **MULTI-ANGLE AND TRANSLATIONAL SEAT PAN BEARING MECHANISM**

(30) Priority: 29.01.2024 US 202463626271 P; 28.01.2025 US 202519039017
(71) Applicant: B/E Aerospace, Inc., Winston-Salem, NC 27105 (US)
(72) Inventor: MCKEE, Eric M., Oak Ridge (US); MALATRASI, Gianpaolo, Rural Hall (US); ANELLO, Fabio B., Lewisville (US); RALPH, Neil M., Winston-Salem (US); SUHRE, Ryan J., Winston-Salem (US)
(74) Representative: Dehns

(57) **Abstract**

A passenger seat (100) includes a frame subassembly (102) including a fore transverse beam (114), and a seat pan (104) movably coupled to the frame subassembly. A motion path of the seat pan relative to the frame subassembly includes at least one of rotational motion and translational motion. The fore end (132) of the seat pan rests on and rides along the fore transverse beam such that the fore end of the seat pan is unconstrained to adjust in angle and forward translation as the seat pan moves relative to the frame subassembly. In embodiments, the seat pan is pivotably attached to be movable between a use position for seating and a use position for under seat access.

## Description

### TECHNICAL FIELD AND BACKGROUND

The present invention relates generally to seat pan configuration for a passenger seat such as an aircraft passenger seat, and more particularly, to a seat pan configured to rest directly on and ride along a transverse beam such that at least one of rotational and translational motion of the fore end of the seat pan is unconstrained as the seat pan adjusts between different positions.

Passenger seats such as aircraft passenger seats often recline to increase passenger comfort. On short haul flights, recline motion may be limited to the seat back. On long haul flights, recline motion may include the seat back and the seat pan. In either case, in traditional passenger seat constructions, the seat back pivots around a single fixed axis. A single fixed axis requires the seat pan to be decoupled from the seat back, and a separate mechanism to translate the seat pan forward and aft.

Traditional seat pan guide mechanisms constrain the motion of the seat pan relative to the seat frame. For example, traditional seat pan guide mechanisms may movably attach the seat pan to lateral spreaders using a roller and guide slot arrangement. Such an attachment provides a fixed seat pan motion. When a seat designer desires to change the seat motion, for instance recline motion, it is therefore also necessary to change the seat pan motion to achieve a new positional relationship between the seat back and the seat pan. Traditional fixed motion mechanisms complicate the seat design, limit adjustability, and are expensive to implement.

Therefore, what is needed is a passenger seat configuration in which seat pan motion is unconstrained.

### BRIEF SUMMARY

According to one aspect, the inventive concepts according to the present invention are directed to a passenger seat including a frame subassembly including a fore transverse beam, and seat pan movably coupled to the frame subassembly. The seat pan has a fore end, an aft end, a top, a bottom, and opposing lateral sides. In embodiments, a motion path of the seat pan relative to the frame subassembly includes at least one of rotational motion and translational motion, and the bottom of the fore end of the seat pan rests on and rides along the fore transverse beam as the seat pan moves relative to the frame subassembly along the motion path of the seat pan.

In some embodiments, the seat pan is detached from the fore transverse beam, and the passenger seat does not include any mechanism constraining seat pan motion relative to the fore transverse beam.

In some embodiments, at least one of the seat pan and the fore transverse beam carries a friction-reducing component positioned at an interface between the seat pan and the fore transverse beam.

In some embodiments, the frame subassembly further includes spreaders and an aft transverse beam, the seat pan is positioned between the spreaders, and the seat pan is detached from the spreaders and detached from the aft transverse beam.

In some embodiments, the fore end of the seat pan is curved in a downward direction.

In some embodiments, the passenger seat further includes a locking gas spring coupled between the frame subassembly and the seat pan.

In some embodiments, the seat pan includes a first portion pivotably coupled to a shifting pivot, and a second portion pivotably coupled to the first portion, wherein, in use, the second portion is configured to pivot relative to the first portion between a lowered position for seating and a raised position for under seat access.

In some embodiments, the passenger seat further includes a locking gas spring coupled between the frame subassembly and the first portion of the seat pan.

In some embodiments, the passenger seat is adjustable between an upright sitting position and a reclined sitting position, and the motion path of the seat pan includes synchronous rotational motion and translational motion.

According to another aspect, the inventive concepts according to the present invention are directed to an aircraft passenger seat configured to adjust between an upright sitting position and a reclined sitting position. In embodiments, the aircraft passenger seat includes a frame subassembly including spreaders and a fore transverse beam, a seat pan and a seat back positioned between the spreaders, the seat pan and the seat back coupled for synchronous motion between the upright sitting position and the reclined sitting position, a fore end of the seat pan rides directly on the fore transverse beam as the aircraft passenger seat transitions between the upright sitting position and the reclined sitting position such that seat pan motion is unconstrained relative to the fore transverse beam.

In some embodiments, seat pan motion between the upright sitting position and the reclined sitting position includes synchronous rotational and translation motion.

According to a further aspect, the inventive concepts disclosed herein are directed to a passenger seat including a frame subassembly including a fore transverse beam, and a seat pan movably coupled to the frame assembly, wherein a fore end of the seat pan rests directly on and rides along the fore transverse beam such at least one of rotational and translational motion of the fore end of the seat pan is unconstrained as the seat pan adjusts between different sitting positions.

In some embodiments, at least one of the seat pan and the fore transverse beam carries a friction-reducing component positioned at an interface between the seat pan and the fore transverse beam.

In some embodiments, motion of the seat pan between the different sitting positions includes synchronous rotational and translation motion.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a fragmentary side view of an adjustable passenger seat including an unconstrained seat pan, in accordance with example embodiments of this invention;
FIG. 2 is a detailed view of the underside of the seat pan showing the interface between the fore end of the seat pan and the fore transverse beam, in accordance with example embodiments of this invention;
FIG. 3 is a side view of the passenger seat shown in an upright sitting position, in accordance with example embodiments of this invention;
FIG. 4 is a side view of the passenger seat shown in a reclines sitting position, in accordance with example embodiments of this invention; and
FIG. 5 is a fragmentary side view of the passenger seat showing a configuration for a pivoting seat pan for providing seating and under seat access, in accordance with example embodiments of this invention.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant invention that the inventive concepts disclosed herein may be practiced without these specific details. In other instances, well-known features may not be described in detail to avoid unnecessarily complicating the instant invention. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant invention.

Broadly, embodiments of the inventive concepts disclosed herein are directed to a seat pan configuration for a passenger seat such as an aircraft passenger seat. In embodiments, the passenger seat may be a single seat or part of a row of seats, for instance a row of two or more seats positioned on a frame subassembly. In embodiments, the passenger seat is configured to adjust between an upright sitting position in preparation for taxi, takeoff, and landing (TTOL), and a reclined sitting position during flight. In some embodiments, the passenger seat is configured for cradled recline motion to achieve a cradled recline sitting position. In embodiments, the passenger seat is configured to be positioned in intermediate positions between fully upright and fully reclined.

In embodiments, the seat pan is configured to sit directly on and ride along a frame member of the frame subassembly. For example, the frame member may be a transverse beam implemented as a fore beam tube. In use, the fore end of the seat pan sits directly on the fore transverse beam. The seat pan and the fore transverse beam are detached such that the seat pan motion, at least concerning the fore end of the seat pan, is unconstrained. In other words, the passenger seat does not include any intermediate mechanism for coupling the seat pan and the fore transverse beam together, nor any mechanism for guiding relative motion between the seat pan and the fore transverse beam. As such, the fore end of the seat pan is free to rotate and/or translate relative to the fore transverse beam. This allows the fore end configuration to be used with a variety of aft end configurations and seat motion mechanisms in that the fore end is free to tilt and/or forward translate without constraint, among other advantages.

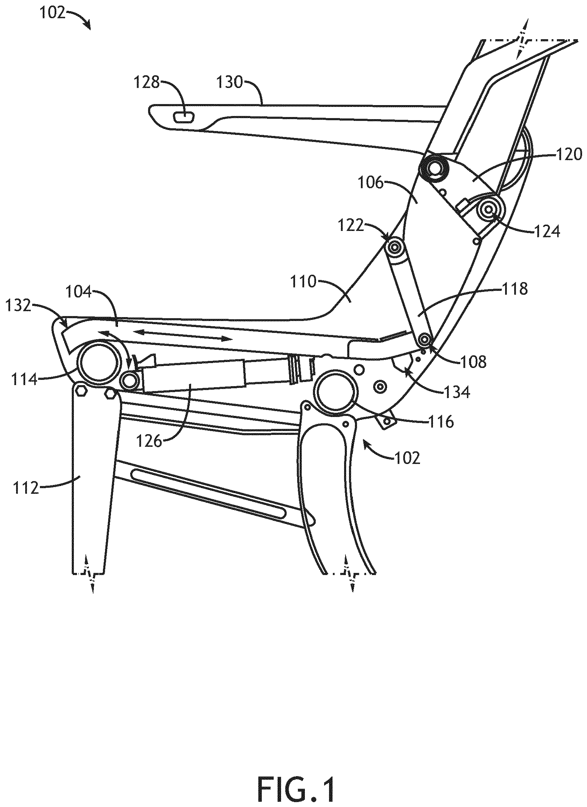

FIG. 1 illustrates a non-limiting example of a reclinable passenger seat 100 compatible for use with the seat pan configuration according to the present invention. The passenger seat 100 generally includes a frame subassembly 102, a seat pan 104, a seat back 106, and pivoting linkage movably coupling the seat back 106 to the frame subassembly 102. In some embodiments, the seat pan 104 and the seat back 106 are pivotably connected at a shifting pivot 108 such that, in use, movement of one of the seat pan 104 and the seat back 106 drives movement of the other. The frame subassembly 102 generally includes fixed spreaders 110 attached to legs 112, a fore transverse beam 114, and an aft transverse beam 116. The fore and aft transverse beams may be beam tubes attached to the spreaders 110 and to the legs 112. In the case of a single passenger seat, the seat may include two spreaders 110, two legs 112, and the two transverse beams 114, 116. In the case of a row of seats, the frame subassembly 102 may include more than two spreaders 110, two or more legs 112, and the two transverse beams 114, 116. In embodiments, each coupled seat pan 104 and seat back 106 is positioned between two fixed spreaders 110.

In embodiments, the seat pan 104 and the seat back 106 are coupled for synchronous motion between the upright sitting position and the reclined sitting position. In the non-limiting example shown, the seat motion is controlled by synchronizing the rotational (e.g., pivoting) motions of pairs of pivoting links. In embodiments, the seat pan 104 and the seat back 106 are pivotably attached at the shifting pivot 108, lower links 118 are pivotably attached to the shifting pivot 108 and to fixed spreaders 110, and upper links 120 are pivotably attached to the seat back 106 and to the fixed spreaders 110. In use, the lower links 118 pivot about a lower rotation axis 122, and the upper links pivot about an upper rotation axis 124. In this configuration, the complex synchronous rotations of the links 118, 120 and the shifting pivot 108 allows the seat back and seat pan motions to be tied together to maintain a comfortable cradled recline motion.

FIG. 1 shows the passenger seat 100 with the nearest fixed spreader removed to show the links 118, 120 and their respective rotational axes. The seat pan 104 and the seat back 106 are coupled at the shifting pivot 108. The term 'shifting' as used herein denotes a pivot connection that is not fixed but moves as the seat transitions between the different sitting positions. Seat motion is coordinated by the links 118, 120 provided as pairs with one of each link type positioned on one lateral side of the seat back 106 to provide a symmetrical arrangement on opposite lateral sides of the passenger seat 100. As shown, each of the links 118, 120 is inclined in a forward direction and is configured to rotate about its respective fixed axis 122, 124. At the same time the links 118, 120 rotate, the shifting pivot 108 moves along a motion path in a controller manner.

In embodiments in which the recline motion is a cradled recline motion, the shifting pivot 108 moves synchronously forward and downward as the passenger seat transitions toward cradled recline, and moves synchronously rearward and upward as the passenger seat transitions toward upright. In this manner, the bottom of the seat back moves closer to the floor when the seat is reclined. Other seat back movements are possible and compatible for use with the seat pan configuration according to the present invention. In some embodiments, the seat pan 104 rotates and translates synchronously such that the seat pan 104 is more forward and more tilted when the passenger seat 100 is fully reclined as compared to when the passenger seat 100 is fully upright.

In some embodiments, the passenger seat 100 includes a lockable gas spring 126 configured to lock and dampen seat motion. In embodiments, the lockable gas spring 126 may be positioned under the seat pan 104, and may be pivotably attached at one end to the frame subassembly 102 and pivotably attached at the opposing end to the seat pan 104. The lockable gas spring 126 may be actuated by a cable, for instance a Bowden style cable, translated by an actuator 128 located in an armrest 130. In use, the actuator 128 may be depressed to unlock the lockable gas spring 126 and released to lock the passenger seat 100 in its current sitting position. As shown, each of the seat pan 104 and the seat back 106 are positioned above and detached from the aft transverse beam 116 such that the shifting pivot 108 can move relative to the frame subassembly 102.

In embodiments, the seat pan 104 includes a fore end 132 and an aft end 134, and further includes a top, a bottom, and opposing lateral sides. The bottom of the fore end 132 sits directly on and rides along the frame subassembly 102, such as the fore transverse beam 114. The aft end 134 is positioned above and is detached from the aft transverse beam 116. In some embodiments, the seat pan 104 may be entirely detached from the frame subassembly 102 except for the point(s) of contact with the fore transverse beam 114. In this configuration, the fore end 132 of the seat pan 104 is unconstrained and therefore free to rotate and/or translate relative to the fore transverse beam 114 regardless of the constrained motion of the shifting pivot 108 or other seat motion mechanism. This allows the particular seat pan configuration to be compatible for use with various motion mechanisms as the unconstrained fore end 132 can accommodate any rotational and translation motions.

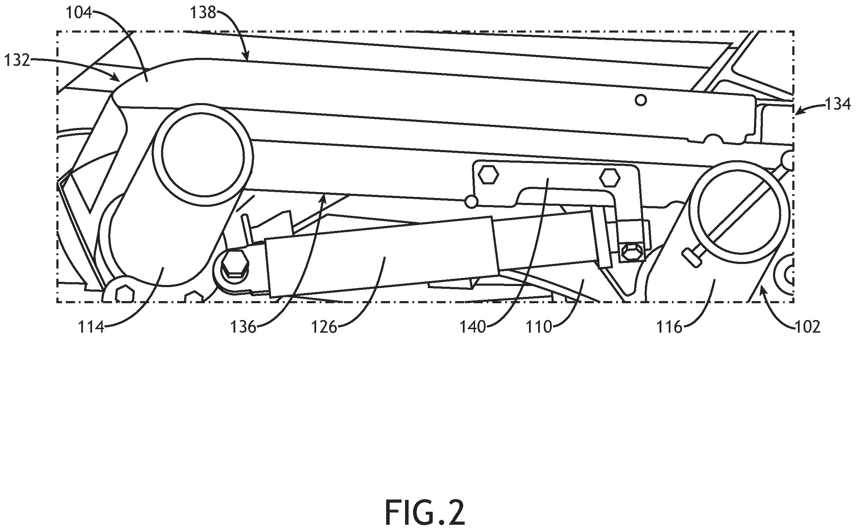

FIG. 2 illustrates a particular configuration of the seat pan 104 and the frame subassembly 102. In some embodiments, the fore end 132 of the seat pan 104 may curve downwards, whereas the seat pan 104 aft of the fore transverse beam 114 may be substantially linear, or at least comparatively more linear than the fore end 132. In some embodiments, the seat pan 104 may be integrally formed. In some embodiments, the seat pan 104 may include a first portion 136 pivotably connected to the shifting pivot, and a second portion 138 pivotably connected to the first portion 136. The first portion may directly contact and ride along the fore transverse beam 114, whereas the second portion 138 may rest on the first portion 136 in a position elevated above the fore transverse beam 114. In some embodiments, the first portion 136 may include one or more downwardly extending portions configured to laterally engage the spreaders 110 to prevent the seat pan 104 from shifting laterally (e.g., maintain squareness). In some embodiments, the second portion 138 may laterally overhang the sides of the first position 136.

In embodiments, the locking gas spring 126 may be pivotably coupled between the frame subassembly and the seat pan 104. For example, the locking gas spring 126 may be pivotably attached at one end to a release bracket 140 mounted to the seat pan 104. In use, the locking gas spring 126 may be releasably attached to the bracket 140 to control the seat motion when the seat pan 104 is used for seating, and detached from the bracket 140 to allow the second portion 138, or the entire seat pan 104 when integrally formed, to be rotated upward for under seat access as discussed below. Thus, when the locking gas spring 126 is attached to the bracket 140, the seat pan 104 is locked in the seating position and cannot be lifted, obviating the need for a separate mechanism to lock the seat pan 104 in the 'down' position.

FIG. 2 further illustrates the interface between the seat pan 104 and the fore transverse beam 114. As stated above, the seat pan 104 sits directly on the fore transverse beam 114 without a separate, intermediate guiding or coupling mechanism. Friction may be reduced at the interface to facilitate the seat pan 104 sliding along the fore transverse beam 114, which is typically metal. The interface may include a friction-reducing component carried by one or more of the seat pan 104 and the fore transverse beam 114, for instance a plastic strip carried on the seat pan 104 or plastic sleeve encircling at least a portion of the fore transverse beam 114.

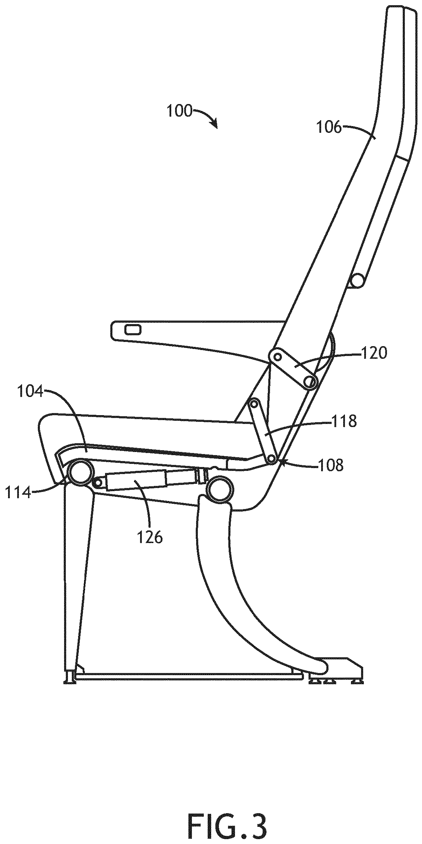

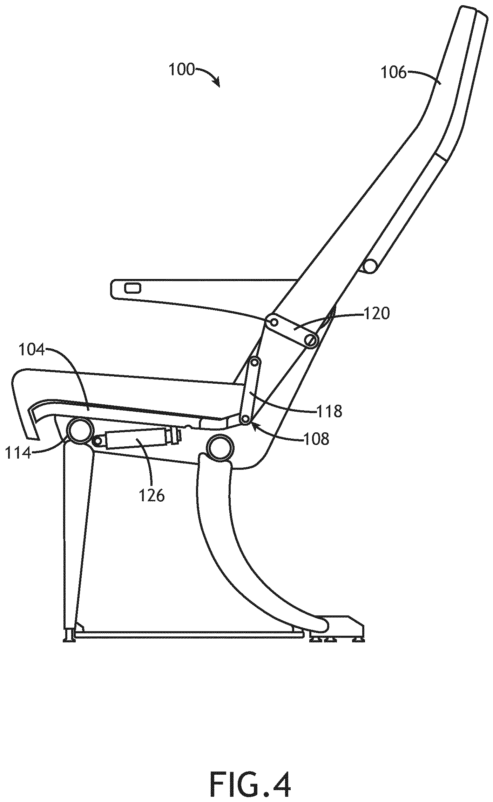

FIGS. 3 and 4 illustrate the respective fully upright and fully reclined sitting positions of the passenger seat 100. When in the upright sitting position shown in FIG. 3, the seat back 106 is nearer vertical and the seat pan 104 is shifted aft. When in the reclined sitting position shown in FIG. 4, the seat back 106 is rotated in the direction toward horizontal and the seat pan 104 is shifted forward. The seat pan 104 may also change in tilt between the two sitting positions. In some embodiments, the passenger seat 100 may be locked in any position between the fully upright sitting position and the reclined sitting position by the lockable gas spring 126.

In the non-limiting example shown, as the passenger seat 100 transitions from the upright sitting position to the cradled recline sitting position, the upper link 120 rotates to become less inclined, and the lower link 118 rotates forward to move the shifting pivot 108 downward and forward. In use, as the passenger seat 100 transitions from the cradled recline sitting position to the upright sitting position, the upper link 120 rotates to become more inclined, and the lower link 118 rotates aft to move the shifting pivot 108 rearward and upward. In this configuration, a more comfortable and natural positional relationship is maintained as the passenger seat 100 transitions between upright and reclined. As further shown, the recline motion does not intrude into the passenger space behind the seat when at full recline, thereby reducing recline guilt and increasing recline in tapered sections in the last row of seats, among other advantages.

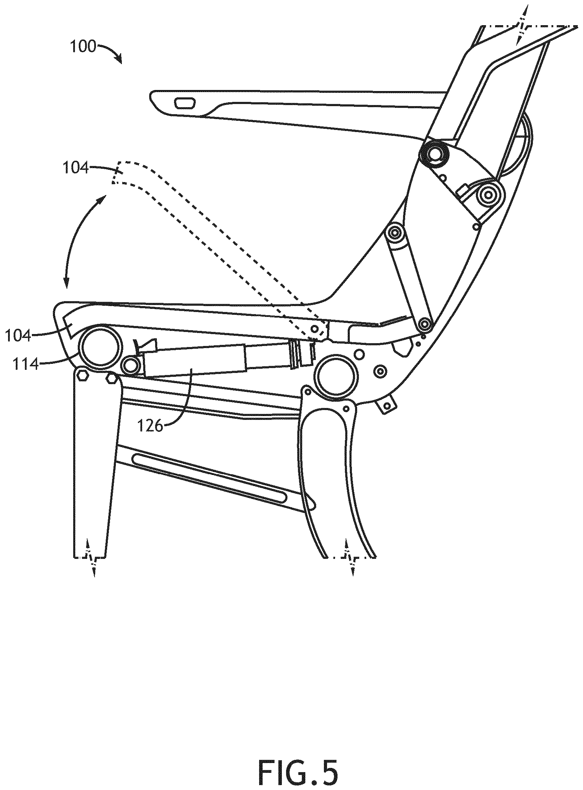

FIG. 5 illustrates a non-limiting example of the passenger seat 100 in which the seat pan 104 can be pivoted between a position for seating use and a position for under seat access. In the seating use position, the seat pan 104 rests on the fore transverse beam 114. In the under seat access position, the fore end of the seat pan 104 is rotated upward. As described above, in some embodiments, the attachment of the locking gas spring 126 to the seat pan 104 may lock the seat pan in the seating use position.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this invention, it will be understood that numerous changes may be made which fall within the scope of the invention as defined by the claims.

## Claims

1. A passenger seat (100), comprising:
a frame subassembly (102) including a fore transverse beam (114);
a seat pan (104) movably coupled to the frame subassembly, the seat pan having a fore end, an aft end, a top, a bottom, and opposing lateral sides; and
a seat back (106), the seat back coupled to the seat pan for synchronous motion between an upright sitting position and a reclined sitting position;
**characterized in that**:
a motion path of the seat pan relative to the frame subassembly, between the upright sitting position and the reclined sitting position, includes at least one of rotational motion and translational motion; and
the bottom of the seat pan rests on and rides along the fore transverse beam as the seat pan moves relative to the frame subassembly along the motion path of the seat pan.

2. The passenger seat (100) according to claim 1, wherein the seat pan is detached from the fore transverse beam, and the passenger seat does not include any mechanism constraining seat pan motion relative to the fore transverse beam.

3. The passenger seat (100) according to claim 1 or 2, wherein at least one of the seat pan and the fore transverse beam carries a friction-reducing component positioned at an interface between the seat pan and the fore transverse beam.

4. The passenger seat (100) according to any preceding claim, wherein:
the frame subassembly further comprises spreaders (110) and an aft transverse beam (116);
the seat pan is positioned between the spreaders;
the seat pan is detached from the spreaders; and
the aft end of the seat pan (134) is positioned above and detached from the aft transverse beam.

5. The passenger seat (100) according to any preceding claim, wherein the fore end (132) of the seat pan is curved in a downward direction.

6. The passenger seat (100) according to any preceding claim, further comprising a locking gas spring (126) coupled between the frame subassembly and the seat pan.

7. The passenger seat (100) according to any preceding claim, wherein the seat pan comprises:
a first portion (136) pivotably coupled to a shifting pivot (108); and
a second portion (138) pivotably coupled to the first portion;
wherein, in use, the second portion is configured to pivot relative to the first portion between a lowered position for seating and a raised position for under seat access.

8. The passenger seat (100) according to claim 7, wherein the locking gas spring (126) is coupled between the frame subassembly and the first portion (136) of the seat pan.

9. The passenger seat (100) according to any preceding claim, wherein:
the motion path of the seat pan (104) includes synchronous rotational motion and translational motion.

10. The passenger seat (100) according to any preceding claim, wherein the passenger seat is an aircraft passenger seat
